# EUROPEAN PATENT APPLICATION

(11) **EP 4 797 117 A1**
(43) Date of publication of application: **26.08.2026**
(21) Application number: 26158602.8
(22) Date of filing: 13.02.2026
(51) Int. Cl.: G06F 16/2458, G06F 16/334

(54) **RETRIEVAL AUGMENTED GENERATION**

(30) Priority: 20.02.2025 GB 202502487
(71) Applicant: Vodafone Group Services Limited, Newbury RG14 2FN (GB)
(72) Inventor: HOU, Jindong, London, W2 6BY (GB); USMAN, Sayed Muhammad Yasin, London, W2 6BY (GB); MAHAMMOD, Rifat, London, W2 6BY (GB); LAU, Fiona, London, W2 6BY (GB)
(74) Representative: Boult Wade Tennant LLP

(57) **Abstract**

A computer-implemented method is provided to determine a candidate source from amongst a plurality of sources for a retrieval process. The method comprises receiving a prompt, generating prompt embeddings representative of the prompt, querying one or more data stores for content embeddings representative of content in the plurality of sources and associated metadata, determining the likelihood of relevance of each source based on the query, determining one or more candidate sources based on the prompt and relevance likelihoods, and generating an indication of the candidate sources. The content of the candidate sources is retrievable for a retrieval augmented generation (RAG) process.

## Description

### TECHNICAL FIELD

The present disclosure relates to methods and apparatus related to retrieval augmented generation.

### BACKGROUND

In recent years, the field of generative Artificial Intelligence (AI) has experienced remarkable advancements, particularly with the development of language models such as large language models (LLMs). These sophisticated systems are capable of understanding and manipulating human language, enabling various applications in natural language processing, content generation, and problem-solving. LLMs, with their ability to comprehend complex linguistic structures and semantic relationships, represent a significant leap forward in the realm of AI, opening up avenues for innovation and creativity in numerous domains.

Language models such as LLMs are trained to provide natural language responses to user formulated prompts. Typically LLMs are trained based on a large and generalised training dataset. In a standalone application, the knowledge which an LLM is able to draw upon to generate responses is limited to the contents of the training dataset on which it was trained (this knowledge being baked into the parameters of the trained LLM). A standalone pre-trained LLM's knowledge base is therefore static and limited.

Recently, methods allowing a language model to draw upon additional data (which may include data which is kept up-to-date) have been employed. Such methods include Retrieval-Augmented Generation (RAG). RAG typically includes the augmentation of an LLM with a data retrieval process to provide the LLM with data relevant to a given input prompt. The LLM can then generate a response to the prompt using the retrieved relevant data. Such a process can provide an LLM with access to an up-to-date and/or domain specific knowledge base, thereby allowing an LLM to generate responses based on up to date and/or specific information.

RAG is dependent on the quality and completeness of its knowledge base. The knowledge base typically takes the form of a vector database that stores content embeddings (or vectors) representative of the content of the knowledge base to be queried. Typically, all sources are embedded into a single data store, but if the database is not comprehensive, diverse, accurate, and relevant, this can lead to gen AI models producing irrelevant, incorrect or misleading responses, such as AI hallucinations, limiting the usefulness and adoption of such techniques for example in enhancing LLMs. This impacts the credibility and utility of RAG models, particularly in critical applications like customer support, creative content generation, and information retrieval systems. In order to keep the knowledge base for retrieval up-to-date with relevant content, the database may be updated, using new documents or removing outdated documents.

It is in this context that the present disclosure has been devised.

### SUMMARY OF INVENTION

Whilst new content may be embedded into a knowledge source to further enrich RAG, problems may arise where a gen AI model may generate content using RAG to include misinformation, bias or outdated information, for example in the form of AI hallucinations.

Furthermore, typically, updating the database requires manually updating and/or re-indexing the stored content. However, this is a lengthy process because it would require an up-to-date mapping of documents saved. This can result in the system being constrained by a 'cutoff date'-the last time the knowledge base was refreshed-potentially reducing its effectiveness for dynamic or rapidly changing information.

According to an aspect of the invention, there is provided a computer-implemented method of determining a candidate source from amongst a plurality of sources for a retrieval process. The computer-implemented method comprises receiving a prompt; generating prompt embeddings representative of the prompt; querying, based on the prompt embeddings, one or more data stores comprising content embeddings representative of content included in a plurality of sources and metadata associated with each content embedding; determining, based on the querying of the one or more data stores, a likelihood of relevance of each source to the prompt; determining, based on the prompt and the likelihoods of relevance, one or more candidate sources from among the plurality of sources; and generating an indication of the one or more candidate sources, wherein content of the one or more candidate sources is retrievable for a retrieval augmented generation, RAG, process. By providing the above described method, a filtering means may be provided to filter the most appropriate sources for RAG, such that the retrieved content used to augment the content generated by a generative AI model using RAG is likely to be more accurate. In particular, the metadata facilitates efficiently analysing the sources to identify the most pertinent sources for a specific query. This leads to more precise retrieval and content generation using RAG. By filtering through various sources in this manner, one can identify credible, peer-reviewed, and authoritative information while minimizing the risk of misinformation, bias, or outdated data. This process enhances the integrity of research findings, decision-making, and the advancement of knowledge in these fields. Furthermore, by providing metadata, this negates the need for any classifier model, thereby leading to a more efficient setup of a system that can be implemented.

The likelihood of relevance of each source to the prompt may correspond to a prediction of a relevancy of the source for generating an output in response to the prompt using RAG. Here, the content of the one or more candidate sources may be retrievable for generating content, by a generative artificial intelligence, AI, model, using RAG.

The plurality of content embeddings may be indexed in the one or more data stores. The one or more data stores may be vector databases. Each data store may store the metadata alongside the content embeddings. The metadata corresponds for example to additional fields of data further describing the content embeddings.

The method may further comprise outputting a signal including the generated indication of the one or more candidate sources to a RAG model.

Optionally, the metadata includes information associated with each content embedding, including at least one from among topics, title, source type, file size, engagement, accuracy, timeliness, domain authority, author, language and user preferences associated with the respective content embedding. Advantageously, assessing sources according to the metadata helps to improve the reliability of sources used for generating content using RAG.

Optionally, each metadata is assigned a respective weight. Advantageously, by weighting the metadata, the metadata may efficiently be used for filtering out less reliable sources for RAG, by allowing sources to be prioritised.

Optionally, the method further comprises scoring each source to determine the likelihood of relevance of each source to the prompt, the scoring of each source being based on the prompt embeddings, the content embeddings for each respective source and the metadata associated with the respective content embeddings for each respective source. The scoring of each source may be further based on the number of content embeddings that match the prompt. Advantageously, the likelihoods of relevance may be accurately determined due to the metadata, thereby leading to greater accuracy for performing RAG.

Optionally, the method may further comprise ranking the plurality of sources, to determine the likelihood of relevance of each source to the prompt. Advantageously, ranking allows for efficiently determining the most suitable source to be put forward for RAG.

Optionally, determining the one or more candidate sources comprises selecting at least one source ranked to be most relevant to the prompt. This facilitates in efficiently determining the most suitable sources for reliably performing RAG.

Optionally, the method further comprises, if two or more sources ranked to be most relevant to the prompt are selected, generating a candidate source based on the selected two or more sources ranked to be most relevant to the prompt. Advantageously, multiple sources may be combined for context-rich responses. The candidate source may be generated by combining the two or more sources into a single source. The generated candidate source may be stored.

Optionally, the generating of the prompt embeddings comprises generating sparse embeddings representative of the prompt and dense embeddings representative of the prompt. The content embeddings may include sparse embeddings and dense embeddings. Sparse embeddings may be usable for keyword searching to match specific terms in the prompt to the content. Dense embeddings may be usable for semantic searching to determine the underlying intent of the prompt. Advantageously, by generating sparse and dense embeddings of the prompt, they may be usable for performing a hybrid search to query the data store based on both keyword and semantic searching.

Optionally, the querying of the data store comprises querying the one or more data stores based on the dense embeddings and the sparse embeddings. Advantageously, by performing the hybrid search based on both the dense and sparse embeddings corresponding to the prompt, this helps to improve search accuracy. This is because the dense embeddings are for performing a semantic search to query the data store based on the semantics i.e. underlying intent of the query, whilst the sparse embeddings are for performing a keyword search to identify exact matches in the data store.

Optionally, the method may further comprise receiving a further prompt and iteratively repeating the steps described herein in respect of the further prompt.

Optionally, the method may further comprise, based on the determining of the one or more candidate sources, updating a weight of each metadata associated with each source, such that, if a further prompt is received, the determination of the likelihoods of relevance is based on the prompt embeddings representative of the further prompt, the content embeddings and the updated weighted metadata. Advantageously, this means the determination of the suitable sources for a given query may be used for future queries, thereby improving the efficiency with which suitable sources may be identified. For example, sources may be prioritised according to the weighted metadata for future queries, thereby leading to more accurate and efficient retrieval. For example, metadata weights may be updated to increase the weighting of metadata associated with the one or more candidate sources for prioritising the one or more candidate sources, and to reduce the weighting of the metadata associated with at least one source ranked to be least relevant to the prompt for deprioritising the at least one source ranked to be least relevant to the prompt.

Optionally, the method may further comprise receiving a retrieval request for retrieving content from the one or more candidate sources indicated by the signal; and transmitting content of the one or more candidate sources, the retrieved content for generating content using RAG. Accordingly, more accurate retrieval may be performed by virtue of the most relevant source being used for retrieval.

Optionally, the querying of the one or more data stores comprises querying a plurality of data stores, the plurality of data stores corresponding to the plurality sources such that each data store is for storing content embeddings representative of content included in the respective source. As each source is embedded into its own data store, this facilitates in dynamically updating and/or adding new sources for RAG retrieval.

Optionally, the generating of the prompt embeddings includes providing the prompt to an embedding generator, to generate the prompt embeddings. The embedding generator may be a trained model or a rules-based algorithm.

Optionally, the querying of the one or more data stores includes providing the prompt embeddings to a search algorithm, to obtain a query output based on the prompt embeddings, the content embeddings and the associated metadata.

Optionally, the determining of the likelihoods of relevance includes providing an output of the querying to a source evaluation model, to generate an evaluation output for each source, each evaluation output indicative of the likelihood of relevance of relevance of each source to the prompt. The source evaluation model may be a scoring and/or ranking algorithm arranged to score and/or rank the sources based on comparing the metadata and content embeddings with the prompt embeddings. The likelihoods of relevance may be considered as a suitability of the source for generating a response using RAG in response to the prompt.

Optionally, the determining of the one or more candidate sources further includes providing the prompt and the likelihoods of relevance to an artificial intelligence, AI, agent, to generate a candidate output indicative of the one or more candidate sources. The AI agent may be a large language model (LLM) agent, such that the core neural network is an LLM.

According to a further aspect of the invention, there is provided a computer-implemented method of forming a source retrieval framework for a retrieval process, the computer-implemented method comprising: providing one or more data stores for a corresponding one or more sources, each source including content; generating content embeddings representative of content included in the one or more sources; and for each source, storing the content embeddings associated with that source in a respective data store from amongst the one or more data stores, to form a source retrieval framework, the content represented by the stored content embeddings being retrievable for generating content using a RAG process, the source retrieval framework being dynamically updatable whilst content included in at least one of the one or more sources is retrievable for generating content using a RAG process. Advantageously, by using separate data stores for each source of information, this facilitates in a dynamically updatable source retrieval framework that both improves the efficiency of adding new sources and also improves the accuracy of retrieving relevant information for RAG. By contrast to RAG systems of the prior art which require the database to be updated and/or re-indexed each time a new source is added, the present invention allows for new sources, such as those containing the most up-to-date information, to be added without requiring any changes to the other databases by virtue of each source being embedded into its own data store. Furthermore, any data stores that are not requiring any changes can continue to be used for retrieval by a generative AI model generating content using a RAG process, thereby providing a dynamically updatable source retrieval framework. For example, a generative AI model that generates content in response to a prompt using a RAG process may continue to use data stores not undergoing any updates in the source retrieval framework. As such, this facilitates in non-destructively evolving the model, thereby improving efficiency of adding new sources to and/or updating existing sources within the source retrieval framework.

Optionally, the source retrieval framework is dynamically updatable to include one or more further sources, whilst the content of the one or more sources is retrievable for generating content using a RAG process. As such, sources may be updated by a user in real-time.

Optionally, the method further comprises updating the source retrieval framework to include one or more further sources, the updating of the source retrieval comprising: adding a further data store to the one or more data stores to provide a plurality of data stores, the further data store for a corresponding further source; generating content embeddings representative of content included in the further source; and storing the content embeddings associated with the further source in the further data store, wherein the content represented by the stored content embeddings associated with the further source is retrievable for generating content using a RAG process, wherein the plurality of data stores including the respective content embeddings representative of the one or more sources and the further source form an updated source retrieval framework. As such, sources may be updated by a user in real-time.

Optionally, if the one or more sources includes a plurality of sources, the source retrieval framework is dynamically updatable to update at least one source from among the plurality of sources whilst other source or sources from among the plurality of sources are retrievable for generating content using a RAG process. As such, sources may be updated by a user in real-time, such that the other sources can continue to be used for generating content using RAG whilst sources are being updated.

Optionally, the method further comprises updating the source retrieval framework to update at least one source from among the plurality of sources, the updating of the source retrieval framework comprising changing the content embeddings representative of changed content included in the at least one source from among the plurality of sources in a respective data store, whilst the content included in the other source or sources from among the plurality of sources are retrievable for generating content using a RAG process. As such, sources may be updated by a user in real-time, such that the other sources can continue to be used for generating content using RAG whilst sources are being updated.

Optionally, the changing of the content embeddings comprises generating content embeddings representative of the changed content in the at least one source, and replacing the stored content embeddings representative of the content prior to being changed with the content embeddings representative of the changed content in the respective data store. As such, this facilitates dynamically updating sources by replacing old content that is no longer relevant with more relevant and reliable content for RAG.

Optionally, the changing of the content embeddings comprises removing content embeddings from the respective data store, the removed content embeddings representative of deleted content in the at least one source associated with the respective data store. As such, this facilitates dynamically updating sources by removing old content that is no longer relevant.

Optionally, the method further comprises receiving an input including metadata for each content embedding; and tagging each content embedding with the respective received metadata. By tagging content embeddings with metadata, the metadata can be used to filter more relevant sources for generating content using RAG.

Optionally, the method further comprises assigning a weight to each metadata. A plurality of weights may be assigned for each metadata, the weights usable for determining a likelihood of relevance of the source including the content embedding associated with the metadata to a prompt. The weights may thus be for prioritising content of the sources according to the prompt, for helping to filter through the sources to find reliable sources for generating content using a RAG process.

Optionally, the method further comprises providing: an embedding generator for generating prompt embeddings representative of a prompt; a search algorithm for querying, based on the prompt embeddings, the one or more data stores; a source evaluation model for determining, based on a query output of the search algorithm, a likelihood of relevance of each source to the prompt; and an AI agent for determining, based on the prompt and the likelihood of relevance of each source to the prompt, one or more candidate sources from among the one or more sources.

Optionally, the method further comprises retrieving content from the source retrieval framework for generating content using the retrieved content.

According to yet another aspect of the invention, there is provided computing apparatus comprising: processing circuitry; and memory comprising instructions which when executed by the processing circuitry cause the computing apparatus to be operable to perform a method as described herein.

According to a yet further aspect of the invention, there is provided a computer readable medium carrying instructions which when executed by processing circuitry of a computing apparatus, cause the computing apparatus to be operable to carry out a method as described herein.

According to still another aspect of the invention, there is provided a source retrieval framework for a retrieval process, the source retrieval framework comprising a plurality of data stores for a corresponding plurality of sources, each data store including content embeddings representative of content included in its respective source, and each source being retrievable for generating content using a RAG process.

Optionally, the source retrieval framework further comprises: an embedding generator for generating prompt embeddings representative of a prompt; a search algorithm for querying, based on the prompt embeddings, the one or more data stores; a source evaluation model for determining, based on a query output of the search algorithm, a likelihood of relevance of each source to the prompt; and an AI agent for determining, based on the prompt and the likelihood of relevance of each source to the prompt, one or more candidate sources from among the one or more sources.

It will be appreciated from the foregoing disclosure and the following detailed description of the examples that certain features and implementations described as being optional in relation to any given aspect of the disclosure set out above should be understood by the reader as being disclosed also in combination with the other aspects of the present disclosure, where applicable. Similarly, it will be appreciated that any attendant advantages described in relation to any given aspect of the disclosure set out above should be understood by the reader as being disclosed as advantages of the other aspects of the present disclosure, where applicable. That is, the description of optional features and advantages in relation to a specific aspect of the disclosure above is not limiting, and it should be understood that the disclosures of these optional features and advantages are intended to relate to all aspects of the disclosure in combination, where such combination is applicable.

### BRIEF DESCRIPTION OF THE SEVERAL VIEWS OF THE DRAWINGS

Certain examples of the present disclosure will now be described, with reference to the accompanying drawings, in which:
FIG. 1 is a schematic illustration of the flow of a typical Retrieval Augmented Generation (RAG) process in the art;
FIG. 2 illustrates a method of determining a candidate source from amongst a plurality of sources for a retrieval process in accordance with examples disclosed herein;
FIG. 3 illustrates a system for determining a candidate source in accordance with examples disclosed herein;
FIG. 4 is a schematic illustration of an example agent framework according to examples disclosed herein;
FIG. 5 illustrates a method of determining a candidate source based on source scores according to examples herein;
FIG. 6 illustrates a method of forming a source retrieval framework for a retrieval process in accordance with examples disclosed herein;
FIG. 7 illustrates a source retrieval framework in accordance with examples disclosed herein;
FIG. 8 illustrates a method 800 of updating the source retrieval framework of FIG. 6;
FIG. 9 is a schematic illustration of a RAG system in accordance with examples disclosed herein; and
FIG. 10 is a schematic illustration of an example electronic device according to examples disclosed herein.

### DETAILED DESCRIPTON

Hereinafter, examples of the disclosure are described with reference to the accompanying drawings. However, it should be appreciated that the disclosure is not limited to the described examples, and all changes and/or equivalents or replacements thereto also belong to the scope of the disclosure. The same or similar reference denotations may be used to refer to the same or similar elements throughout the specification and the drawings.

As used herein, the terms "have," "may have," "include," or "may include" a feature (e.g., a number, function, operation, or a component such as a part) indicate the existence of the feature and do not exclude the existence of other features. Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

As used herein, the terms "A or B," "at least one of A and/or B," or "one or more of A and/or B" may include all possible combinations of A and B. For example, "A or B," "at least one of A and B," "at least one of A or B" may indicate all of (1) including at least one A, (2) including at least one B, or (3) including at least one A and at least one B.

As used herein, the terms "first" and "second" may modify various components regardless of importance and do not limit the components. These terms are only used to distinguish one component from another. For example, reference to a first component and a second component may indicate different components from each other regardless of the order or importance of the components.

It will be understood that when an element (e.g., a first element) is referred to as being (physically, operatively or communicatively) "coupled with/to," or "connected with/to" another element (e.g., a second element), it can be coupled or connected with/to the other element directly or via a third element. In contrast, it will be understood that when an element (e.g., a first element) is referred to as being "directly coupled with/to" or "directly connected with/to" another element (e.g., a second element), no other element (e.g., a third element) intervenes between the element and the other element.

The terms as used herein are provided merely to describe some embodiments thereof, but not to limit the scope of other embodiments of the disclosure. It is to be understood that the singular forms "a," "'an," and "the" include plural references unless the context clearly dictates otherwise. All terms including technical and scientific terms used herein have the same meaning as commonly understood by one of ordinary skill in the art to which the embodiments of the disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

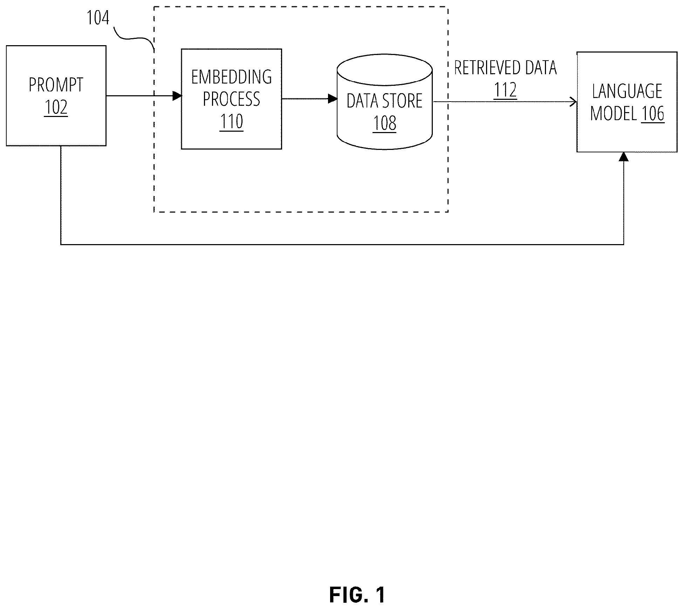

FIG. 1 is a schematic illustration of the flow of a typical Retrieval Augmented Generation (RAG) process. RAG is a methodology in artificial intelligence that combines the capabilities of retrieval-based and generative models to enhance the generation of text or content. The process begins with a prompt 102. The prompt 102 may comprise natural language text and may be formulated by a user in the form of a question, query or demand. In some examples, a prompt may include a system prompt and a user prompt. A system prompt may provide context, instructions and/or guidelines for use in responding to the user prompt. The user prompt may comprise a prompt generated and input by a user. Additionally or alternatively, a user prompt may be generated by another system (such as another language model) utilising the RAG process.

In the absence of a RAG process, the prompt 102 may be provided to a language model 108, which may comprise a Large Language Model (LLM), in isolation. In this respect, an LLM is a type of artificial intelligence model designed to understand, generate, and interpret human language at a vast scale. LLMs are built using deep learning techniques, particularly neural networks with potentially billions of parameters, allowing them to process and analyze extensive corpuses of text data. As a result, LLMs can perform a wide range of natural language processing tasks, such as answering questions, summarizing texts, and generating coherent and contextually relevant sentences or paragraphs. LLMs learn from the patterns in the data they are trained on, enabling them to predict the likelihood of a sequence of words in a sentence, which is the basis for generating text or understanding language input. The language model 106 will therefore generate a response to the prompt 102 based on its parameters learnt through training. The knowledge which the language model 106 is able to draw upon to generate a response to the prompt 102 is limited to the contents of the training dataset on which it was trained (this knowledge being baked into the parameters of the trained language model).

In a RAG process, the prompt 102 is augmented with additional data retrieved during a data retrieval 104. The data retrieval 104 may include searching a data store 108 for data which is relevant to the prompt 102. For example, the prompt 102 may first be processed through an embedding process 110 to generate an embedding representative of the prompt 102. An embedding is a numerical representation of an object such as text, image, audio etc. An embedding typically comprises a vector, whose numerical components are representative of the meaning and/or content of the object for which the embedding is generated.

An embedding representative of the prompt 102 may be used to search the data store 108 for data contained within the data store 108 which is relevant to the prompt 102, for example by sending a lookup to the data store 108 based on the prompt embeddings. Such a search may be facilitated by embeddings representative of data entries in the data store 108. For example, embeddings may be generated (e.g., in advance of a RAG process) for each of a plurality of data entries stored in the data store 108 to generate a plurality of embeddings, where each embedding is representative of a data entry in the data store 108. The plurality of embeddings may form a searchable index which can be searched for embeddings which are close to the embedding representative of the prompt 102. For example, one or more embeddings representative of data entries in the data store 108 may be identified which are close to the embedding representative of the prompt 102. The identified data entries may then be provided as an output of the data retrieval 104 in the form of retrieved data 112.

The retrieved data 112 is provided to the language model 106 along with the prompt 102 such that the language model 106 can generate a response to the prompt 102 using the retrieved data 112. Such a RAG process can provide a language model 106 with access to an up-to-date and/or domain specific knowledge base (as encapsulated by the data store 108), thereby allowing the language model 106 to generate responses based on up to date and/or specific information. A RAG process can also provide a convenient and user friendly way to access data from a data store 108. For example, the data store 108 can be interrogated using natural language prompts to which natural language responses may be generated based on the contents of the data store 108. Although not described in detail here, both the data retrieval 104 framework and the language model 106 may be hosted as a cloud service accessible to a user device via a suitable network, such as the Internet.

Here, the data store 108 may be a closed and/or open domain knowledge base. In this respect, the closed domain knowledge base 106 may consist of a list of specified documents or a structured data repository of finite and defined scope. The closed domain knowledge base 106 may be confined to a specific subject area or domain, focusing on a particular topic, discipline, or field of study. Unlike open domain knowledge bases that cater to a broad range of subjects with no restrictions on the content's diversity or content, closed domain knowledge bases are tailored to provide detailed, expert-level information on their specific focus areas. Consequently, they enable more accurate and efficient retrieval of information for tasks requiring domain-specific expertise.

A RAG process such as that described above with reference to FIG. 1 may have particular utility where there is a single data store 108 from which data entries can be retrieved for all prompts 102. However, such a RAG process may suffer from difficulties when used to retrieve data from a more complex data structure and/or using a more complex data retrieval process. For example, whilst new content may be embedded into a knowledge source to further enrich RAG, problems may arise where the language model 106 may generate content using RAG to include misinformation, bias or outdated information, for example in the form of AI hallucinations, which can impair the usefulness and uptake of these powerful systems. Hallucinations refer to instances where artificial intelligence models, such as the RAG-enhanced language model 106, produce outputs that are incorrect, nonsensical, or not grounded in factual accuracy. For example, the language model 106 may be susceptible to generation of outputs which are not factually correct taking into account the context and content of the data store 108. These hallucinations occur when the language model 106, despite being trained on vast datasets, generates information that does not accurately reflect real-world or domain specific knowledge as contained in the data store 108, or which lacks logical coherence. AI-generated hallucinations can pose significant challenges in applications where accuracy and reliability of information are critical, such as in document interrogation, or any form of decision-making support. For example, for customer care or medical care applications, hallucinations can present serious problems if the output of the language model 106 is to be relied on.

Furthermore, typically, updating the data store 108 requires manually updating and/or re-indexing the stored content. However, this is a lengthy process because it would require an up-to-date mapping of documents saved. This can result in the system being constrained by a 'cutoff date'-the last time the knowledge base was refreshed-potentially reducing its effectiveness for dynamic or rapidly changing information.

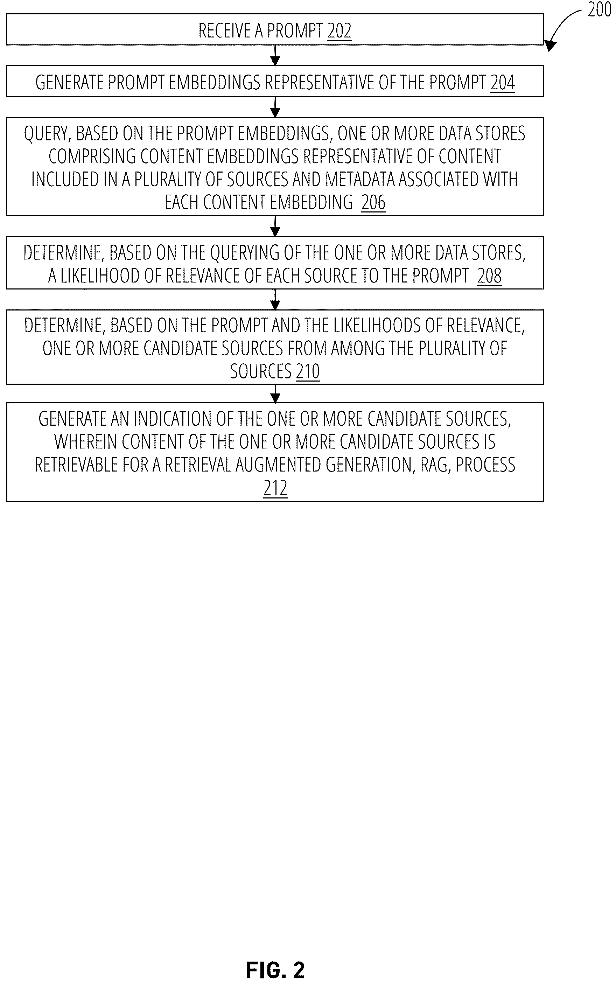

FIG. 2 shows a computer-implemented method 200 of determining a candidate source from amongst a plurality of sources for a retrieval process. In block 202, method 200 receives a prompt. In block 204, method 200 generates prompt embeddings representative of the prompt. In block 206, method 200 queries, based on the prompt embeddings, one or more data stores comprising content embeddings representative of content included in a plurality of sources and metadata associated with each content embedding. In block 208, method 200 determines, based on the querying of the one or more data stores, a likelihood of relevance of each source to the prompt. In block 210, method 200 determines, based on the prompt and the likelihoods of relevance, one or more candidate sources from among the plurality of sources. In block 212, method 200 generates an indication of the one or more candidate sources, wherein content of the one or more candidate sources is retrievable for a retrieval augmented generation, RAG, process.

By providing the above described method, a filtering means may be provided to filter the most appropriate sources for RAG, such that the retrieved content used to augment the content generated by a generative AI model using RAG is likely to be more accurate. In particular, the metadata facilitates efficiently analysing the sources to identify the most pertinent sources for a specific query. This leads to more precise retrieval and content generation using RAG. By filtering through various sources in this manner, one can identify credible, peer-reviewed, and authoritative information while minimizing the risk of misinformation, bias, or outdated data. This process enhances the integrity of research findings, decision-making, and the advancement of knowledge in these fields. Furthermore, by providing metadata, this negates the need for any classifier model, thereby leading to a more efficient setup of a system that can be implemented.

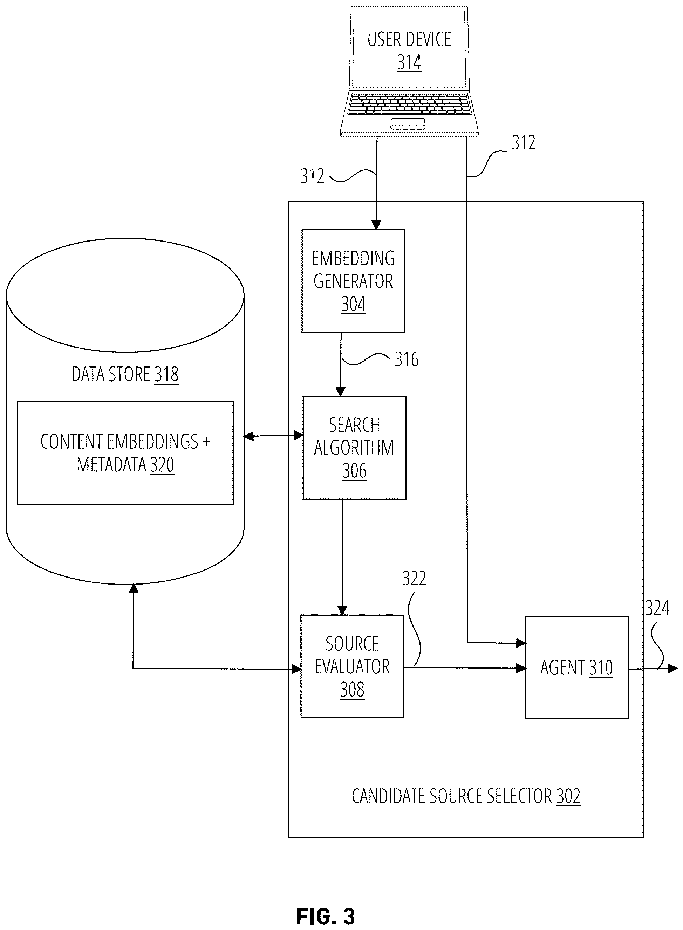

FIG. 3 shows a system including a candidate source selector 302, which may be implemented to carry out the method 200 of FIG. 2. In particular, the candidate source selector 302 is for determining determining a candidate source from amongst a plurality of sources for a retrieval process, which may be implemented to complement a RAG technique.

The candidate source selector 302 in FIG. 3 includes an embedding generator 304, a search algorithm 306, a source evaluator 308 and an agent 310. More particularly, the embedding generator 304 is configured to receive a prompt 312 and generate prompt embeddings 316 representative of the prompt 312. The search algorithm 306 is arranged to query, based on the prompt embeddings 316, a data store 318 comprising content embeddings representative of content included in a plurality of sources and metadata associated with each content embedding. The source evaluator 308 is configured to determine, based on the querying of the data store 318, a likelihood of relevance 322 of each source to the prompt 312. The agent 310 is configured to determine, based on the likelihoods of relevance 322, one or more candidate sources from among the plurality of sources, and generate an indication 324 of the one or more candidate sources, wherein content of the one or more candidate sources is retrievable for a retrieval augmented generation, RAG, process.

In more detail, the prompt 312 is provided to the embedding generator 304 configured to generate prompt embeddings 316 representative of the prompt 312. The embedding generator 304 may therefore be arranged to perform block 204 of method 200 of FIG. 2. The prompt 312 may for example be a natural language prompt like the prompt 102 described in relation to FIG. 1, and correspond for example to a query input by a user via a user device 314. The user device may be any suitable user device, such as an electronic device including a computing device, including but not limited to a laptop or a portable cellular phone. As was explained above, an embedding comprises a numerical representation of an object (in this case the prompt 312), which in this case typically comprises a vector representation of the high-dimensional data of the prompt in a lower-dimensional space, where the vector numerical components are representative of the meaning and/or content of the prompt 312. In the example of FIG. 3, the embedding generator is configured to generate sparse embeddings and dense embeddings which are both representative of the prompt 312. Here, "sparse embeddings" will be understood to be numerical representations of the prompt which are relatively high-dimensional, where most of the vector components are zero. As such, sparse embeddings may represent each word and/or phrase of the prompt so as to represent the content of the prompt, such that each component corresponds to a specific feature or concept. As such, embeddings representative of identical objects may comprise the same vectors which are identical to each other with zero Euclidean distance between them and/or cosine matching in an embeddings space. In doing so, this facilitates keyword searching to match identical terms or phrases between two different objects i.e. between the prompt embeddings 316 and the content embeddings in the data store 318. "Dense embeddings" will be understood to be numerical representations of the prompt which are relatively low-dimensional as compared to sparse embeddings, where most or all values in the vector may be non-zero. As such, embeddings representative of objects having similar semantic meaning may comprise vectors which are close to each other (e.g., having a relatively small Euclidean distance and/or cosine similarity between them) in an embeddings space. For example, a first prompt and a second prompt which have a similar semantic meaning but which are phrased differently may result in a first embedding and a second embedding which are close to each other in the embeddings space. As such, dense embeddings may capture the meaning of the prompt to determine the underlying intent of the prompt i.e. semantic and/or structural relationships between objects - in this case, to allow features in a prompt to be mapped to similar content stored in a data store (such as the data store 318 described in further detail below). The embedding generator 304 may comprise any suitable embedding model, including but not limited to trained models (such as generative pre-trained transformers). As such, in the example of FIG. 3, the prompt embeddings 316 include both sparse embeddings and dense embeddings, although it will be appreciated that the disclosure is not limited to this and in other examples of the disclosure, the prompt embeddings 316 may be either sparse embeddings or dense embeddings, or any suitable numerical representation of the prompt 312.

The prompt embeddings 316 are then provided to the search algorithm 306, which may be arranged to perform block 206 of method 200. In particular, the search algorithm 306 is arranged to query a data store 318 using the prompt embeddings 316, for example by sending a lookup arranged to compare the prompt embeddings 316 with the content embeddings included in the one or more data stores 318. It will be appreciated that whilst the search algorithm 306 is shown in FIG. 3 as being separate, the search algorithm 306 may merely be incorporated as a function performed by the embedding generator 304 and/or source evaluator 308.

The data store 318 may be one or more data stores and include an open and/or closed-domain knowledge base, whereby one or more sources are embedded into the data store 318, such that the data store 318 is a vector database. The sources may be of any document type, including (but not limited to) word-type documents, spreadsheets, PDFs, Confluence^{(R)}, etc. More particularly, the data store 318 comprises embeddings 320 including content embeddings tagged with associated metadata. Here, the content embeddings are representative of content included in the one or more sources (not shown). In the example of FIG. 3, the content embeddings particularly include both sparse embeddings and dense embeddings representative of the content. In doing so, this provides a hybrid search, helping to query the data store 318 using the sparse and dense prompt embeddings 316 to accurately retrieve content with both keyword and semantic matching. The plurality of content embeddings are indexed in the data store 318, such that the metadata is stored alongside the content embeddings, and may be considered as being tagged to the content. The metadata is also in the form of embeddings. The metadata corresponds to additional information about the content, for example in the form of additional fields of data further describing the content embeddings, and may therefore relate to any information that is descriptive, administrative and/or structural in relation to the associated content embeddings. For example, the metadata may include a plurality of fields related to the content embedding, including for example topics, title, source type, file size, time stamps, number of views, domain authority (e.g. indicating a credibility of the source), author, language and user preferences associated with the respective content embedding. It will be appreciated this is a non-exhaustive list and the metadata may include one or more of the above and/or any further suitable metadata. For example, the metadata may further include various different metrics. For example, a timeliness metric may be indicative of time stamp metadata representing when the respective content was formed, published and/or updated, whereby more recent time stamps may therefore indicate more up to date content. Engagement metrics may be indicated by metadata representing the number of views, comments and/or edits.

In the example of FIG. 3, each metadata is assigned a respective weight, which is usable for prioritising the associated content. For example, the weights may take on a numerical value according to a scale, such as (but not limited to) percentages with a total weight summing up to 100%, or a value between 0 and 1, so as to represent a significance of the metadata for obtaining the respective likelihoods of relevance 322. For example, where the metadata includes a timeliness metric and an engagement metric, the timeliness metric may be assigned a higher weighting than the engagement metric because how up to date the content is (i.e. the timeliness metric) may be considered to be more important for determining how reliable a source may be considered for generating content using a RAG process, as compared with how frequently the content has been engaged with (i.e. the engagement metric). The weights may be assigned to the metadata at the time or after forming the metadata embeddings, for example using a rules-based algorithm or via a user input. In some examples of the disclosure, the weights may also be updatable in response to the generation of the output 324 i.e. following the determination of the candidate source by the agent 310 (this is described in more detail with respect to the agent 310 below).

The search algorithm 306 may therefore retrieve content embeddings mapped to the prompt embeddings 316, which form a query output provided to the source evaluator 308, which is configured to determine the likelihood of relevance 322 of each source to the prompt 312 based on the query output. The source evaluator 308 may therefore perform block 208 of method 200. Here, the "likelihood of relevance 322" is an indication or prediction of how relevant the respective source is for providing content that can be used to generate new content using a RAG process for answering the prompt 312. The likelihoods of relevance 322 may therefore be considered as a suitability of the source for use as retrieved content in a RAG process. In the example of FIG. 3, the source evaluator 308 is a scoring and ranking algorithm, which is arranged to score and rank the sources based on the query output from the search algorithm 306. More particularly, in the example of FIG. 3, the source evaluator 308 processes the query output according to the weighted metadata. In doing so, this helps to effectively short-list the sources for the agent 310 (described in further detail below) to determine a suitable candidate assessment of the sources indicative of how relevant and suitable the sources are for generating a response to a prompt. In the example of FIG. 3, the source evaluator 308 is configured to score each source by firstly calculating scores for each content embedding in dependence of the weighted metadata (for example by using the weighted metadata to scale the scoring) and then summing the scores of the content embeddings to provide a source score. Given that the query output includes all content in the data store 318 that matches the prompt 312 according to the search algorithm (in the hybrid search example of FIG. 3, this includes both keyword and semantic matches), the source evaluator 308 therefore processes all of these retrieved content embeddings to collate them and score/rank sources accordingly. The source evaluator 308 may for example take into account how many content embeddings in a given source match the prompt 312. For example, where a first source embedded into the data store 318 has only one content embedding which has an exact keyword and/or close semantic matching to the prompt 312 but the rest of the source has no bearing with respect to the prompt 312, the source evaluator 308 may score and/or rank a second source more highly, where that other source has a high number of content embeddings that match the prompt 312, even if none of them match as closely as the content embedding of the first source. This is because the second source may be deemed to be more relevant for generating content in response to the prompt 312 than the first source because a relatively large amount of content is available in the second source for generating content in response to the prompt 312 as compared with the first source. It will be appreciated however that the disclosure is not limited to this and the source evaluator 308 may be a scoring algorithm or a ranking algorithm, or any suitable statistical- or rules-based algorithm, or trained model for determining the likelihoods of relevance of the respective sources to the prompt.

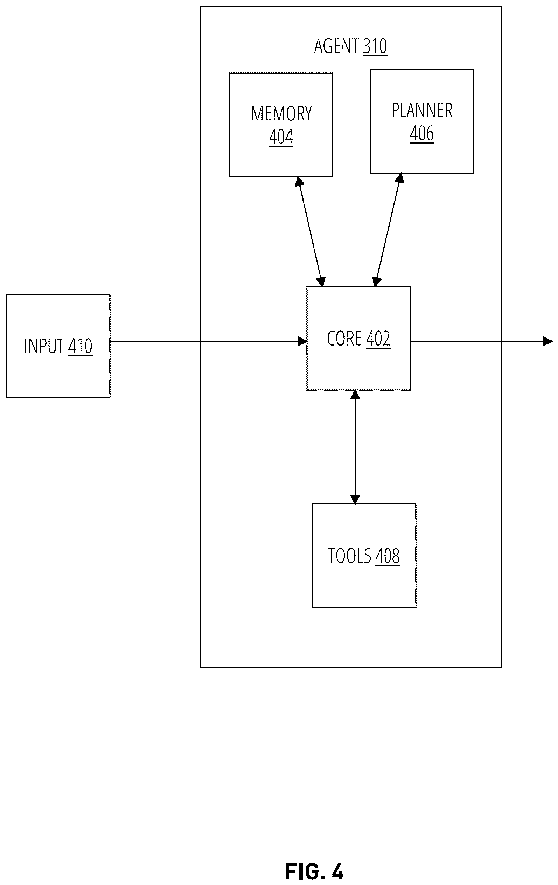

The source evaluator 308 thus provides the likelihoods of relevance 322 of the respective sources to the agent 310 configured to determine a candidate source. Here, the agent 310 is an AI agent (also known as an AI-powered agent, or intelligent agent), which is a system arranged to autonomously perform complex tasks using complex reasoning, memory and means to execute the task. A schematic illustration of an example of a framework of the agent 310 is shown in FIG. 4. In particular, the agent 310 includes a core neural network 402, a memory 404, a planner 406, and tools 408.

The core 402 may be any suitable neural network, such as an LLM (which thus provides an LLM-powered agent 310) that has been trained using a vast amount of training data to process and understand language. The core 402 acts as a brain that processes an input 410 (in this case, the prompt 312 and the likelihoods of relevance 322 received from the source evaluator 308). In particular, the core 402 is configured to perform sequential reasoning to process the input 410 (in this case, to determine the one or more candidate sources). Here, "sequential reasoning" may be considered as the "thoughts" that the core 402 goes through, whilst the output may be considered as the "action" taken. As such, the core 402 is arranged to generate an output which corresponds to the output 324 in FIG. 3. The core 402, such as an LLM, may undergo any suitable training techniques including fine-tuning to be tailored to process the input 410 efficiently and accurately.

The core 402 is in communication with the memory 404, which is a store associated with the core 402 and may be for storing internal logs and interactions with users. The memory 404 of the agent 310 typically includes a short-term memory and a long-term memory module. The short-term memory module is typically for storing data related to the specific prompt, including for example a ledger of actions and reasoning steps that the core 402 goes through whilst responding to a single prompt 312. Typically, the short-term memory module is temporary such that any stored data is deleted following generating the output. The long-term memory module typically stores data relating to the learned insights and underlying patterns, which may be recalled for future interactions. In doing so, the memory 404 is usable for managing the past behaviours and interactions of the core 402, to help the core 402 keep track of the state of flow of operations, observations and overall progress.

The core 402 is in further communication with the planner 406 of the system agent 310, which helps the core 402 to plan future actions by breaking down complex tasks into manageable steps and sequencing them appropriately. The planner 406 is typically configured to do so by firstly performing plan formulation and subsequently plan reflection. Plan formulation includes task decomposition, whereby the planner 406 is configured to formulate a plurality of subtasks based on the input 410. Task decomposition may be performed using any suitable technique, such as a chain-of-thought method for adaptively tackling sub-tasks one by one rather than all at once, or a tree-of-thought approach for performing multi-path reasoning to explore different paths to process the input 410. Plan reflection facilitates the agent 310 to perform self-evaluation using a suitable internal feedback mechanism configured to provide an observation following the output critic- or evidence-based prompting framework. Any suitable internal feedback mechanism may be used, such as cycling through a sequence of thought, action and observation and repeating the cycles accordingly, such that the core 402 may adjust its output based on real-time feedback. The planner 406 may be a module or the like.

The core 402 also accesses tools 408, which may be external modules for performing specific tasks i.e. defined executable workflows to allow the agent 310 via the core 402 to execute its task. For example, the tools 408 may include various application programming interfaces (APIs) and/or other trained models. Hence, the agent 310 is able to process an input 410 to generate an output using its core 402 and the memory 404, planner 406 and any tools 408 it has access to. Whilst the source evaluator 308 is shown as being separate from the agent 310, it will be appreciated that the disclosure is not limited to this and in some examples of the disclosure, the source evaluator 308 may form part of the agent 310 as one of the tools 408 accessible by the agent 310.

Returning to the example of FIG. 3, the LLM of the agent 310 is prompted with the prompt 312 and the likelihoods of relevance 322 from the source evaluator 308, to generate a candidate output 324 indicating one or more candidate sources. Although not shown, in some examples the input 410 prompting the core 402 of the agent 310 may, in addition to the prompt 312 and the likelihoods of relevance 322, further also include the query output from the search algorithm 306.

The output 324 is thus provided to a RAG model such as the language model 106 in FIG. 1 to augment its response to the prompt 312. It will be appreciated that the output 324 may include retrieved content of the indicated candidate source, so as to be directly provided to the language model 106 to generate the response to the query prompt 312. The output 324 may otherwise be provided to a retrieval a separate retrieval algorithm configured to retrieve the content corresponding to the candidate source indicated by the output 324 and subsequently provided to the language model 106.

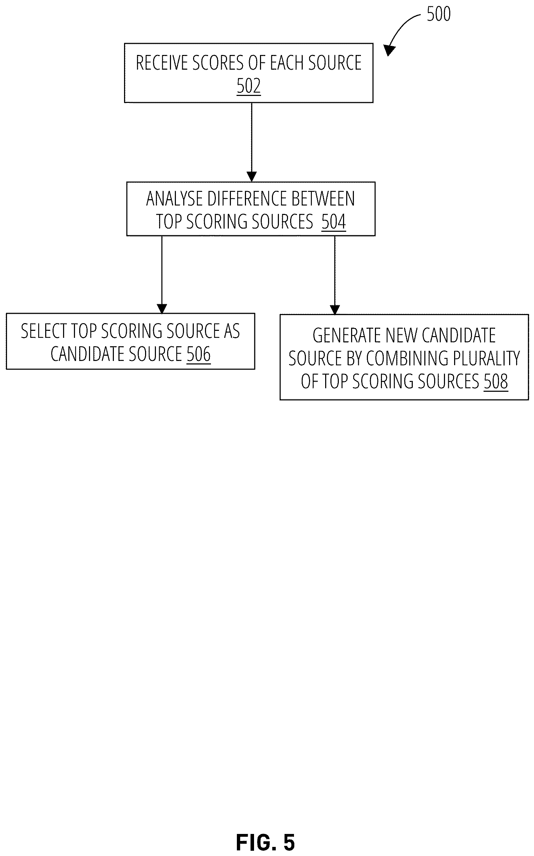

FIG. 5 is a method 500 of determining a candidate source, which may for example be performed by the agent 310. As described above, the source evaluator 308 scores and/or ranks the plurality of sources to provide the likelihoods of relevance 322. At block 502, the agent 310 receives the scores and/or ranks of the plurality of sources. At block 504, the agent 310 analyses the difference between each of the top scoring sources to determine if the difference is sufficient to select one or more of those sources as the candidate source, using any suitable means such as a statistical analysis tool (which may be for example amongst the tools 408 of the agent 310) to analyse whether that calculated difference marks that source is being significantly more relevant to the prompt 312 as compared to other sources for use as the candidate source. For example, the agent 310 may determine whether the highest scoring source has a statistically significantly higher score to be selected as the only source. Where the top scoring source (i.e. the source ranked highest to be most relevant to the prompt 312) is analysed by the agent 310 to be significantly more relevant to the prompt 312 than any other source, the agent 310 may determine that source only as the candidate source, thereby selecting and outputting that source as the candidate source in the candidate output 324 at block 506. This may be the case for example, where the highest scoring source has a score of 0.9 on a scale of 0 to 1 as determined by the source evaluator 308, whereas the next highest scoring source has a score that is significantly less for example at only 0.5. In such a case, the agent 310 generates an output 324 indicating the selected source. In some examples of the disclosure, the output 324 may also include the score assigned to the selected source (in this case for example 0.9) for relevancy to the prompt 312.

In other examples of the disclosure, the agent 310 may generate a confidence score based on the likelihoods of relevance 322, whereby the confidence score is included in the output 324 in place of the relevance score. Here, the confidence score is indicative of how confident the agent 310 is with respect to a relevancy of the candidate source to the prompt 312 for the purposes of augmenting content generation in a RAG process. The confidence score may be generated by any suitable means.

For illustrative purposes, given a prompt 312 (e.g. "Can you tell me more about system M released by company N?"), the candidate source selector 302 may process the prompt 312 as described herein to determine that one source only (i.e. the top scoring source) is the candidate source, such that its agent 310 generates an output 324 indicating that that one source is selected as the candidate source with a determined relevance and/or confidence score. For illustrative purposes, the output 324 may be a natural language output reading for example "Source X is the top most relevant source with a score of 90%", where source X is one of the sources stored in the data store 318. The agent output 324 may then be provided to a RAG system to retrieve the content of the candidate source indicated by the output 324 to augment the RAG response to the prompt 312 as generated by e.g. the language model 106. Where the score assigned by the source evaluator 308 and/or a confidence score generated by the agent 310 is included in the output 324, this may be particularly beneficial for performing subsequent RAG, as the language model 106 in the RAG system is able to take into account the relevancy of the candidate source for generating its response to the prompt 312 and therefore may improve the accuracy and nuance of the response.

There may however be cases where more than one source is indicated to have a relatively high score (for example where the top ranking source has a score of say 0.9 and the next ranked source has a score of 0.89). In such cases, the agent 310 may determine that each of these highly scoring sources are suitable for augmenting the output of a RAG model. In such a case, the method 500 includes block 508, whereby the agent 310 is configured to generate a new source, which combines each of the highly relevant sources into a single source. In doing so, multiple sources may be combined for context-rich responses. The newly generated candidate source may then be stored in the data store 318 and indicated in the agent output 324 for subsequent retrieval for a RAG process by the language model 106. For example, given a prompt 312 (e.g. "Can you tell me more about the system released by company X?"), the candidate source selector 302 may process the prompt 312 as described herein to identify a plurality of highly relevant sources and combine them into a newly generated candidate source, such that its agent 310 generates an output 324 indicating that the newly generated candidate source is selected and optionally specifying which sources have been combined to generate the newly generated source. In such cases, the agent 310 may consider the top scoring sources and generate a new source in consideration of the calculated relevance scores. For example, where the agent 310 determines that the top two sources are substantially equally relevant to the prompt, the agent 310 generates the new source where half the content is provided from one of the sources and the other half of the content from the other source, such that the output 324 of the agent 310 specifies for example "new source XY' is the most relevant source and corresponds to 50% source X and 50% source Y", where sources X and Y are amongst the plurality of sources stored in the data store 318. In examples where two or more sources are indicated to be relevant but with different scores, the agent 310 may thus generate the new source in consideration of those different scores. This may be the case for example where a small portion of one source has a highly relevant passage, whilst another source has a higher portion of relevant content, in which case the agent 310 may combine the sources into the newly generated source, indicating in its output 324 "new source AB' is the most relevant source and corresponds to 70% source A and 30% source B", where sources A and B are amongst the plurality of sources in the data store 318. It will be appreciated these are all merely examples for illustrative purposes, and that the agent 310 is configured to generate a new source in consideration of the likelihoods of relevance and/or confidence scores of the top scoring sources.

The disclosure is not limited to this however and in some examples of the disclosure, the agent 310 may output an indication 324 that all the top scoring sources should be used for augmenting the response to the prompt 312, rather than generating the combined candidate source at block 508 as described above. This may for example be particularly beneficial where there are relatively few sources indicated to be highly relevant to the prompt 312.

As briefly described above, in some examples of the disclosure, the metadata weights may be updatable. In such examples, once the agent 310 has generated its indication of one or more candidate sources as the output 324, the agent 310 is in such examples configured to communicate with the data store 318 and use its internal feedback to determine whether the weights assigned to the metadata are optimised for generating its output 324. For example, this may be based on the planner 406 of the agent 310 which incorporates internal feedback as an evaluation tool. As such, this means that when further prompts 312 are received, the candidate source selector 302 may perform the steps of method 200 as described above, whereby the determination of the likelihoods of relevance by the source evaluator 308 is based on prompt embeddings representative of the further prompt, the content embeddings and the updated weighted metadata. Advantageously, this means the determination of the suitable sources for a given query may be used for future queries, thereby improving the efficiency with which suitable sources may be identified. For example, sources may be prioritised according to the weighted metadata for future queries, thereby leading to more accurate and efficient retrieval. For example, metadata weights may be updated to increase the weighting of metadata associated with the one or more candidate sources for prioritising the one or more candidate sources, and to reduce the weighting of the metadata associated with at least one source ranked to be least relevant to the prompt for deprioritising the at least one source ranked to be least relevant to the prompt.

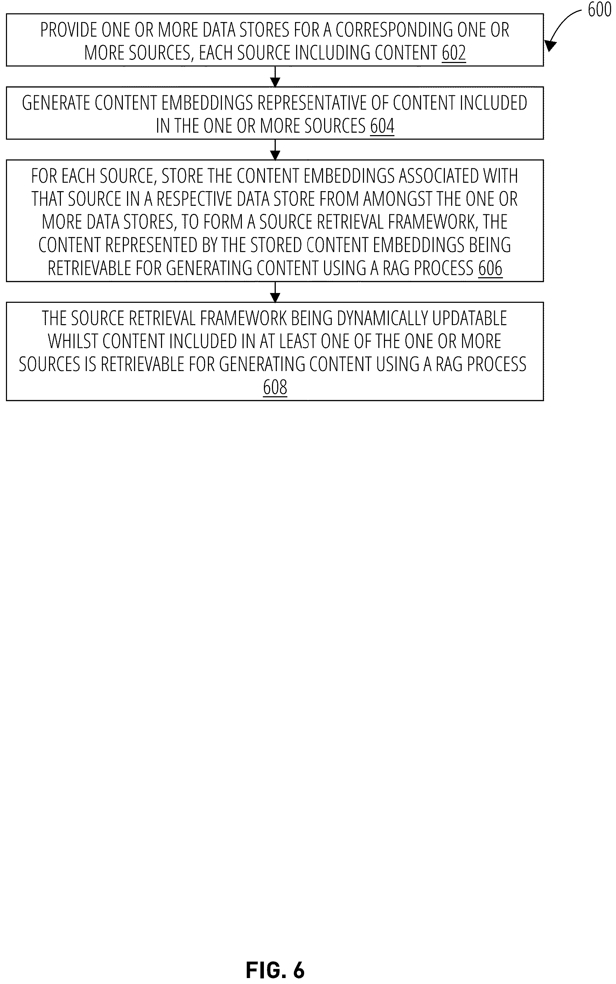

The examples of FIGS. 2 to 5 have been described with reference to a data store 318, which may include one or more data stores. The following FIGS. 6 to 9 describe examples of the disclosure where a plurality of data stores is provided, such that each source is embedded into its own data store.

FIG. 6 shows a computer-implemented method 600 of forming a source retrieval framework for a retrieval process. In block 602, method 600 provides one or more data stores for a corresponding one or more sources, each source including content. In block 604, method 600 generates content embeddings representative of content included in the one or more sources. In block 606, method 600 for each source, stores the content embeddings associated with that source in a respective data store from amongst the one or more data stores, to form a source retrieval framework, the content represented by the stored content embeddings being retrievable for generating content using a RAG process. In block 608, method 600 the source retrieval framework being dynamically updatable whilst content included in at least one of the one or more sources is retrievable for generating content using a RAG process.

Advantageously, by using separate data stores for each source of information, this facilitates in a dynamically updatable source retrieval framework that both improves the efficiency of adding new sources and also improves the accuracy of retrieving relevant information for RAG. By contrast to RAG systems of the prior art which require the database to be updated and/or re-indexed each time a new source is added, the present invention allows for new sources, such as those containing the most up-to-date information, to be added without requiring any changes to the other databases by virtue of each source being embedded into its own data store. Furthermore, any data stores that are not requiring any changes can continue to be used for retrieval by a generative AI model generating content using a RAG process, thereby providing a dynamically updatable source retrieval framework. For example, a generative AI model that generates content in response to a prompt using a RAG process may continue to use data stores not undergoing any updates in the source retrieval framework. As such, this facilitates in non-destructively evolving the model, thereby improving efficiency of adding new sources to and/or updating existing sources within the source retrieval framework.

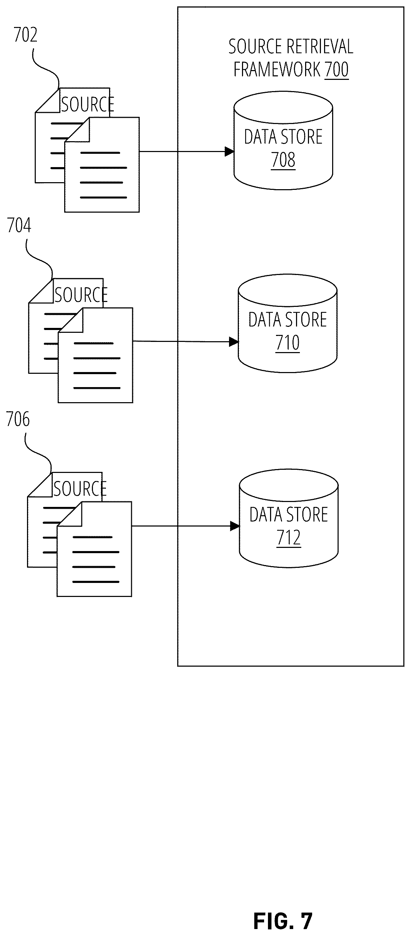

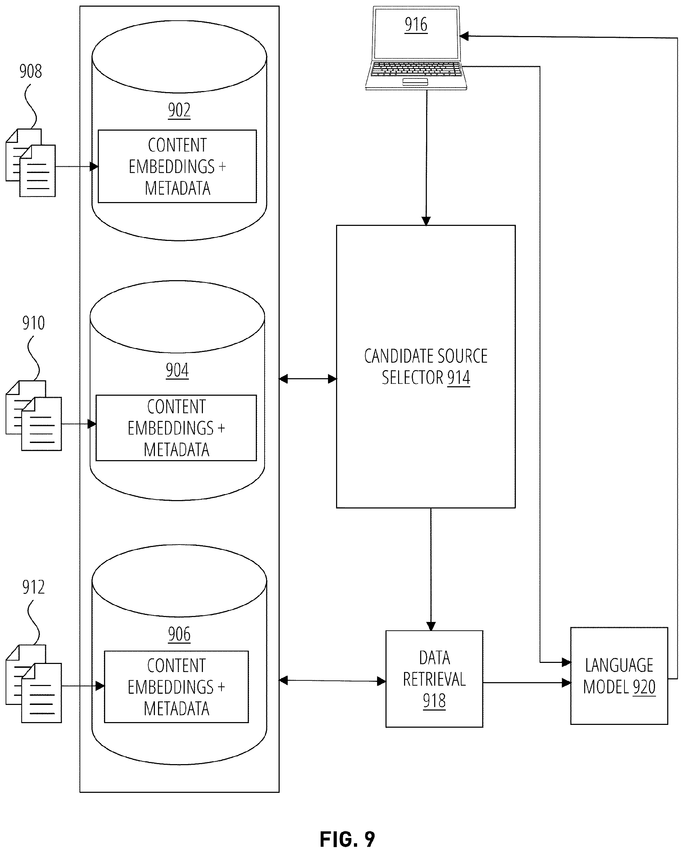

FIG. 7 is a schematic illustration of a source retrieval framework 700 for a retrieval process. In particular, the source retrieval framework 700 may be used in a RAG system. For example, the source retrieval framework 700 may replace the data store 108 in the RAG system of FIG. 1. In some examples of the disclosure, the source retrieval framework 700 may replace the data store 318 of FIG. 3, such that the candidate source selector 302 may be in communication with the source retrieval framework 700 to determine one or more candidate sources. Such an example is further described in relation to FIG. 9 below.

The source retrieval framework 700 may be formed by the method 600. In particular, the source retrieval framework 700 includes a plurality of data stores 708, 710, 712 for a corresponding plurality of sources 702, 704, 706, which may be provided in accordance with block 602 of method 600. Each data store data stores 708, 710, 712 includes content embeddings representative of content included in the corresponding plurality of sources 702, 704, 706. Specifically, data store 708 may correspond to respective source 702 and stores content embeddings representative of source 702. Data store 710 corresponds to source 704 and stores content embeddings representative of source 704. Data store 712 corresponds to source 706 and stores content embeddings representative of source 706. In particular, each source 702, 704, 706, may be provided to an embedding generator (not shown) configured to generate content embeddings representative of the content in the sources. The embedding generator may have the same capabilities as any embedding generator described herein.

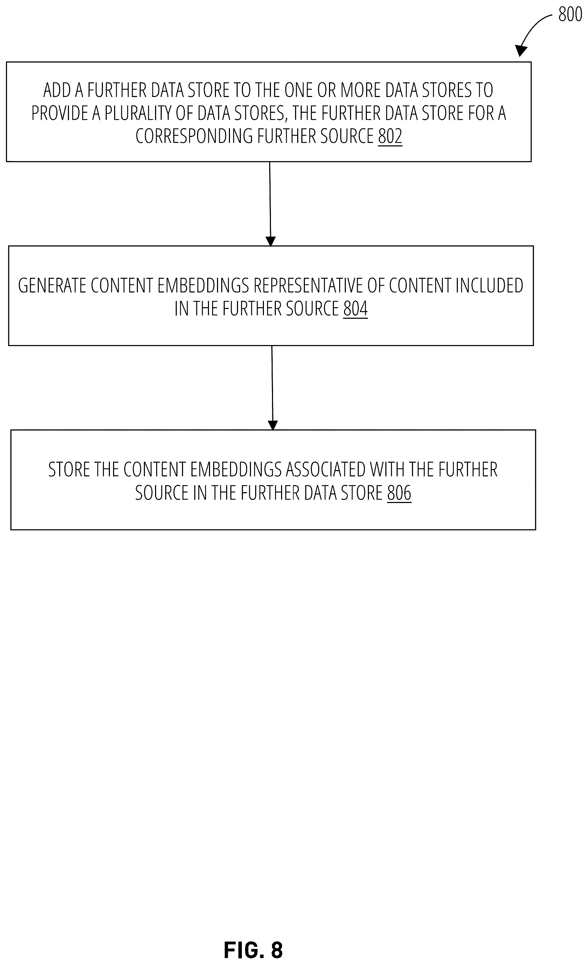

As described above, the source retrieval framework 700 is dynamically updatable to include one or more further sources, whilst the content of the one or more sources is retrievable for generating content using a RAG process. This is illustrated by FIG. 8, which is a method 800 of updating the source retrieval framework 700 and may thus follow subsequently to the steps of method 600. At block 802, the method 800 comprises adding a further data store to the plurality of data stores 708, 710, 712. Here, the further data store is for embedding a corresponding further source, the source being a new source separate from the plurality of sources 702, 704, 706. At block 804, the method 800 comprises generating content embeddings representative of content included in the further source. The content embeddings may be generated using an embedding generator, such as any embedding generator described herein. At block 806, the method 800 comprises storing the content embeddings associated with the further source in the further data store. Here, the content represented by the stored content embeddings associated with the further source is retrievable for generating content using a RAG process. The plurality of data stores including the respective content embeddings representative of the one or more sources and the further source thus form an updated source retrieval framework.

The source retrieval framework 700 has thus been described as being dynamically updatable to include new sources, whilst sources 702, 704, 706 are retrievably accessible for a RAG process, for example as described in relation to FIG. 1. The source retrieval framework 700 may also be dynamically updatable to update sources which are already embedded, without disrupting retrieval of other embedded sources. For example, in the context of FIG. 7, source 702 may require updating. Typically in the art this would require the entire data store 108 to be updated such that the data store 108 may not be used during the updating of the source 702 (e.g. a copy of the data store 108 may need to be generated). However, since each source is embedded into its own data store, this means that whilst source 702 is being updated with corresponding data store 708 requiring its corresponding content embeddings to be updated, embedded sources 704, 706 may continue to be retrievably accessible for a RAG process. Such updating may include changing the content embeddings in data store 708, which is representative of changed content included in source 702, for example by removing content embeddings corresponding to deleted content in source 702 and/or generating new content embeddings representative of the changed content in source 702 and replacing the stored content embeddings representative of the content prior to being changed with the content embeddings representative of the changed content in data store 708. As such, this facilitates dynamically updating sources by replacing old content that is no longer relevant with more relevant and reliable content for RAG.

FIG. 9 illustrates a schematic illustration of a RAG system according to the disclosure. The RAG system includes a source retrieval framework including a plurality of data stores 902, 904, 906, which each store embeddings associated with respective sources 908, 910, 912. In particular, the plurality of data stores may be the source retrieval framework 700, substantially as described in relation to FIG. 7 and therefore repetitive description will not be recited again for conciseness. In the example of FIG. 9, the source retrieval framework further includes a candidate source selector 914, which may be the candidate source selector 302 substantially as described herein, and including a corresponding embedding generator (e.g. embedding generator 304), search algorithm (e.g. search algorithm 306), source evaluator (e.g. source evaluator 308) and agent (e.g. agent 310). Given that the plurality of data stores 902, 904, 906 are in communication with the candidate source selector 914, the embeddings stored in each data store 902, 904, 906 include content embeddings representative of the respective source 908, 910, 912 and metadata associated with the content embeddings, which may be substantially as described herein. In particular, upon forming the source retrieval framework according to e.g. the method 600, an input may be received comprising metadata associated with the content, for example via a user input. In such cases, block 604 may therefore further comprise generating embeddings of the associated metadata as well as the content embeddings, such that the metadata embeddings may then be stored so as to be tagged alongside the content embeddings. The metadata may further be weighted, whereby each metadata may be assigned a weight for prioritising content of the sources according to the prompt. The weights may be substantially as described herein.

Accordingly, the candidate source selector 914 is arranged to receive a prompt from e.g. a user device 916 and generate prompt embeddings representative of the prompt. The candidate source selector 914 is configured to query, based on the prompt embeddings, the plurality of data stores 902, 904, 906, which each comprise embeddings associated with its respective source 908, 910, 912. Here, the embeddings include content embeddings representative of content included in the plurality of sources 908, 910, 912 and metadata associated with each content embedding. The candidate source selector 914 is configured to determine, based on the querying of the data stores 902, 904, 906, a likelihood of relevance of each source 908, 910, 912 to the prompt. The candidate source selector 914 is then configured to determine, based on the prompt and the likelihoods of relevance, one or more candidate sources from among the plurality of sources 908, 910, 912, and generate an indication of the one or more candidate sources.

As shown in FIG. 9, the indication may be output as a signal to a RAG model, such that the content of the candidate source may be retrieved for augmenting the content generation by a language model 920 in response to the prompt. In particular, the output of the candidate source selector 914 (e.g. output 324) and the prompt may be together provided to prompt the language model 920, which is configured to generate a response to the prompt using RAG. Here, the language model 920 may substantially be the language model 106 described herein. In some examples, the data retrieval 918 is performed by the candidate source selector 914. In such examples, the candidate source selector 914 may receive a retrieval request for retrieving content from the one or more candidate sources indicated by the signal, and transmit content of the one or more candidate sources.

Although FIG. 9 shows the embeddings in the data stores 902, 904, 906 as including metadata as well as content embeddings, it will be appreciated that in source retrieval frameworks that include a plurality of data stores for a corresponding plurality of sources without including a candidate source selector (e.g. candidate source selector 914), the plurality of data stores may include content embeddings, optionally without any metadata. This may for example be the case where the source retrieval framework 700 in FIG. 7 is incorporated into the RAG system of FIG. 1, to replace the data store 108.

Various methods, features and implementations have been described herein in which some of the steps may be implemented by any suitable electronic device (such as a computing device) and/or combination of electronic devices (e.g. computing devices). Furthermore devices, modules, functions and components have been described herein which may be realised using a suitable electronic device (such as a computing device) and/or combination of electronic devices (e.g. computing devices).

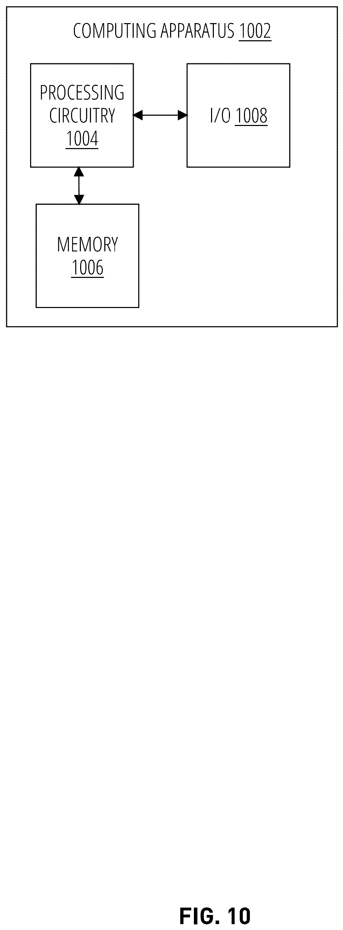

FIG. 10 is a schematic illustration of an example electronic device computing apparatus 1002 which may be used to implement all or part of any method, feature or implementation described herein and/or to realise all or part of any device, module, function and/or component described herein. For example, all or part of any of the method 200 and/or method 600 may be implemented one or more computing apparatus 1002 of the type shown in FIG. 10. The computing apparatus 1002 may comprise an electronic device.

The computing apparatus 1002 may include at least one processing circuitry 1004, memory 1006 and an input/output interface 1008 (I/O). The processing circuitry 1004 may include any suitable processor and/or combination of processors. For example, the processing circuitry 1004 may include one or more of a Central Processing Unit (CPU) and a Graphical Processing Unit (GPU). The memory 1006 may include volatile memory and/or nonvolatile/persistent memory. The memory 1006 may, for example, be used to store data such as an operating system, instructions to be executed by the processing unit (e.g. in the form of software to be executed by the processing unit), configuration information related to the computing apparatus 1002. In some examples, the memory 1006 may be used to store instructions for executing any of the methods and/or steps disclosed herein.

At least the processing circuitry 1004 is connected to the I/O 1008. The I/O 1008 may facilitate communication with one or more other devices. For example, the I/O 1008 may be operable to transmit and/or receive communications to/from other devices in a network. The I/O 1008 may, for example, comprise one or more antennas to facilitate wireless communication with one or more other devices. Additionally, or alternatively, the I/O 1008 may comprise a wired interface for establishing a wired connection with one or more other devices. Additionally or alternatively, the I/O 1008 may comprise means for realising a user interface or and/or user interface itself. For example, the I/O 1008 may comprise a keyboard and/or a user interface for providing keyboard like functionality (such as a touch sensitive display on which an image of a keyboard is displayed) for receiving written input of a user. For example, a keyboard and/or user interface may facilitate receiving an input prompt from a user as described herein.

Optionally, the computing apparatus 1002 may further include a display (not shown). The display may comprise any suitable electronic display such as a touch sensitive display. The display may be connected to at least to the processing circuitry 1004. The processing circuitry 1004 may generate display signals which are sent to the display in order to cause the display information. An electronic display may be user, for example, to display a response returned by a language model as described herein.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. In particular, any dependent claims may be combined with any of the independent claims and any of the other dependent claims.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A computer-implemented method of determining a candidate source from amongst a plurality of sources for a retrieval process, the computer-implemented method comprising:
receiving a prompt;
generating prompt embeddings representative of the prompt;
querying, based on the prompt embeddings, one or more data stores comprising content embeddings representative of content included in a plurality of sources and metadata associated with each content embedding;
determining, based on the querying of the one or more data stores, a likelihood of relevance of each source to the prompt;
determining, based on the prompt and the likelihoods of relevance, one or more candidate sources from among the plurality of sources; and
generating an indication of the one or more candidate sources, wherein content of the one or more candidate sources is retrievable for a retrieval augmented generation, RAG, process.

2. The computer-implemented method of claim 1, wherein the metadata includes information associated with each content embedding, including at least one from among topics, title, source type, file size, engagement, accuracy, timeliness, domain authority, author, language and user preferences associated with the respective content embedding, and/or:
wherein each metadata is assigned a respective weight.

3. The computer-implemented method of any one of claims 1 or 2, wherein the method further comprises scoring each source to determine the likelihood of relevance of each source to the prompt, the scoring of each source being based on the prompt embeddings, the content embeddings for each respective source and the metadata associated with the respective content embeddings for each respective source, and/or
wherein the method further comprises ranking the plurality of sources, to determine the likelihood of relevance of each source to the prompt.

4. The computer-implemented method of claim 3, wherein, if the method comprises ranking the plurality of sources, the method further comprises:
selecting at least one source ranked to be most relevant to the prompt to determine the one or more candidate sources, and
if two or more sources ranked to be most relevant to the prompt are selected, generating a candidate source based on the selected two or more sources ranked to be most relevant to the prompt.

5. The computer-implemented method of any one of the preceding claims 1 to 4, wherein the generating of the prompt embeddings comprises generating sparse embeddings representative of the prompt and dense embeddings representative of the prompt, and
wherein the querying of the one or more data stores comprises querying the one or more data stores based on the dense embeddings and the sparse embeddings.

6. The computer-implemented method of any one of claims 1 to 5, further comprising:
receiving a further prompt and iteratively repeating the steps of any one of claims 1-9 in respect of the further prompt; and
based on the determining of the one or more candidate sources, updating a weight of each metadata associated with each source, such that, if a further prompt is received, the determination of the likelihoods of relevance is based on the prompt embeddings representative of the further prompt, the content embeddings and the updated weighted metadata.

7. The computer-implemented method of any one of claims 1 to 6, further comprising:
receiving a retrieval request for retrieving content from the one or more candidate sources indicated by the signal; and
transmitting content of the one or more candidate sources, the retrieved content for generating content using RAG.

8. The computer-implemented method of any one of claims 1 to 7, wherein the querying of the one or more data stores comprises:
querying a plurality of data stores, the plurality of data stores corresponding to the plurality sources such that each data store is for storing content embeddings representative of content included in the respective source, and/or
providing the prompt embeddings to a search algorithm, to obtain a query output based on the prompt embeddings, the content embeddings and the associated metadata.

9. The computer-implemented method of any one of claims 1 to 8, wherein the generating of the prompt embeddings includes providing the prompt to an embedding generator, to generate the prompt embeddings, and/or
wherein the determining of the likelihoods of relevance includes providing an output of the querying to a source evaluation model, to generate an evaluation output for each source, each evaluation output indicative of the likelihood of relevance of relevance of each source to the prompt, and/or
wherein the determining of the one or more candidate sources includes providing the prompt and the likelihoods of relevance to an artificial intelligence, AI, agent, to generate a candidate output indicative of the one or more candidate sources.

10. A computer-implemented method of forming a source retrieval framework for a retrieval process, the computer-implemented method comprising:
providing one or more data stores for a corresponding one or more sources, each source including content;
generating content embeddings representative of content included in the one or more sources; and
for each source, storing the content embeddings associated with that source in a respective data store from amongst the one or more data stores, to form a source retrieval framework, the content represented by the stored content embeddings being retrievable for generating content using a RAG process,
the source retrieval framework being dynamically updatable whilst content included in at least one of the one or more sources is retrievable for generating content using a RAG process.

11. The computer-implemented method of claim 10, wherein the source retrieval framework is dynamically updatable to include one or more further sources, whilst the content of the one or more sources is retrievable for generating content using a RAG process, and/or
wherein the method further comprising updating the source retrieval framework to include one or more further sources, the updating of the source retrieval framework comprising:
adding a further data store to the one or more data stores to provide a plurality of data stores, the further data store for a corresponding further source;
generating content embeddings representative of content included in the further source;
and
storing the content embeddings associated with the further source in the further data store,
wherein the content represented by the stored content embeddings associated with the further source is retrievable for generating content using a RAG process,
wherein the plurality of data stores including the respective content embeddings representative of the one or more sources and the further source form an updated source retrieval framework.

12. The computer-implemented method of claims 10 or 11, wherein, if the one or more sources includes a plurality of sources, the source retrieval framework is dynamically updatable to update at least one source from among the plurality of sources whilst other source or sources from among the plurality of sources are retrievable for generating content using a RAG process,
wherein the method further comprises updating the source retrieval framework to update at least one source from among the plurality of sources,
the updating of the source retrieval framework comprising changing the content embeddings representative of changed content included in the at least one source from among the plurality of sources in a respective data store, whilst the content included in the other source or sources from among the plurality of sources are retrievable for generating content using a RAG process,
wherein the changing of the content embeddings comprises generating content embeddings representative of the changed content in the at least one source, and replacing the stored content embeddings representative of the content prior to being changed with the content embeddings representative of the changed content in the respective data store,
wherein the changing of the content embeddings comprises removing content embeddings from the respective data store, the removed content embeddings representative of deleted content in the at least one source associated with the respective data store.

13. The computer-implemented method of any one of claims 10 to 12, further comprising:
receiving an input including metadata for each content embedding;
tagging each content embedding with the respective received metadata; and
assigning a weight to each metadata.

14. The computer-implemented method of any one of claims 10 to 13, further comprising providing:
an embedding generator for generating prompt embeddings representative of a prompt;
a search algorithm for querying, based on the prompt embeddings, the one or more data stores;
a source evaluation model for determining, based on a query output of the search algorithm, a likelihood of relevance of each source to the prompt; and
an AI agent for determining, based on the prompt and the likelihood of relevance of each source to the prompt, one or more candidate sources from among the one or more sources.

15. Computing apparatus comprising:
processing circuitry; and
memory comprising instructions which when executed by the processing circuitry cause the computing apparatus to be operable to perform a method according to any one of claims 1 to 14.
